(19) Europäisches Patentamt
European Patent Office
Office européen des brevets

(11) **EP 3 462 262 A1**

(12) **EUROPÄISCHE PATENTANMELDUNG**

(43) Veröffentlichungstag:
**03.04.2019 Patentblatt 2019/14**

(51) Int Cl.:
**G05B 23/02** (2006.01)

(21) Anmeldenummer: **17194030.7**

(22) Anmeldetag: **29.09.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
- **Labisch, Daniel**
  **76149 Karlsruhe (DE)**
- **Pfeiffer, Bernd-Markus**
  **76744 Wörth (DE)**
- **Weber, Douglas**
  **76137 Karlsruhe (DE)**

(54) **AUTOMATISIERTES ZUORDNEN VON MESSDATEN ZUR CLOUDBASIERTEN ÜBERWACHUNG MECHANISCHER ASSETS**

(57) Vorgeschlagen wird ein Verfahren zur Zuordnung von Messdaten zur cloudbasierten Überwachung insbesondere mechanischer Assets einer industriellen Anlage, wobei die industrielle Anlage ein Messdatenarchiv aufweist, in welchem Messdaten einer Mehrzahl an Messstellen, insbesondere Druck- oder Durchflusssensoren, hinterlegt sind, das Zuordnungsverfahren umfassend: Festlegung eines Assets, das einen bestimmten Typ aufweist, insbesondere eines Ventils oder einer Pumpe, wobei dem Asset in der Cloud eine charakteristische Messgröße mit dazugehöriger Messstelle zugeordnet ist; Auslesen eines für den bestimmten Assettyp in der Cloud hinterlegten allgemeinen physikalischen Zusammenhangs zwischen für den bestimmten Assettyp relevanten Messgrößen verschiedener Messstellen; Schrittweise Schätzung der Parameter des physikalischen Zusammenhangs unter Einbeziehung der zu dem bestimmten Assettyp gehörigen charakteristischen Messgröße und den in dem Messdatenarchiv hinterlegten Messdaten der für das bestimmte Asset in Frage kommenden Messgrößen; Schrittweise Vergleich des zuvor ermittelten physikalischen Zusammenhangs mit den zum Schätzen genutzten Messdaten und Bestimmung eines Residuums; Zuordnung der Messdaten zu einem bestimmten Asset anhand einer statistischen Auswertung des ermittelten Residuums.

FIG 1

EP 3 462 262 A1

**Beschreibung**

Die Erfindung betrifft ein Verfahren zur Zuordnung von Messdaten zur cloudbasierten Überwachung mechanischer Assets einer industriellen Anlage, insbesondere Fertigungs- oder Produktionsanlage, wobei die industrielle Anlage ein Messdatenarchiv aufweist, in welchem Messdaten einer Mehrzahl an Messstellen, insbesondere Druck- oder Durchflusssensoren, hinterlegt sind, nach den Ansprüchen 1, 4 und 5. Außerdem betrifft die Erfindung ein dazugehöriges Computerprogramm mit durch einen Computer ausführbaren Programmcodeanweisungen nach Anspruch 12, ein Speichermedium gemäß Anspruch 13 und ein Computersystem nach Anspruch 14.

Eine Zustandsüberwachung von mechanischen Assets einer industriellen Anlage, wie beispielsweise Pumpen, Ventilen oder Wärmetauschern, kann die Ausfallsicherheit und Produktivität einer industriellen Anlage erhöhen. Ein Ziel der Überwachung ist es dabei, Verschleißprozesse oder ungünstige Betriebszustände frühzeitig zu erkennen. Damit können unter anderem Auswirkungen von Verschleißerscheinungen bestimmt und Ausfallrisiken bzw. Restlebensdauern abgeschätzt werden. Dies erlaubt eine zielgerichtete Planung von Wartungsarbeiten.

Basis für die Überwachung stellen Messdaten der entsprechenden Assets dar, die an verschiedenen Messstellen ermittelt werden. Beispielsweise stehen bei einem Ventil als Asset regelmäßig eine Durchflussrate, ein Druck vor und hinter dem Ventil sowie eine Ventilstellung als Messdaten zur Verfügung.

Im Zuge einer automatisierten, auf einer Cloud basierenden Überwachung mechanischer Assets müssen relevante Messdaten, wie beispielsweise eine Durchflussrate oder ein Druck vor bzw. hinter dem Asset, für jedes Asset zusammengestellt und in die Cloud übertragen werden. Dort können anschließend die Daten der entsprechenden Messstellen von einer Vielzahl von Assets ausgewertet werden.

Ein auf einer Cloud basierendes Überwachungssystem weist den bedeutenden Vorteil auf, dass mit einem verhältnismäßig geringen Engineeringaufwand eine Vielzahl an mechanischen Assets automatisiert überwacht werden kann. Eine Voraussetzung hierfür ist, dass die für die Überwachung benötigten Messstellen verfügbar und dem jeweiligen Asset zugeordnet sind. Ein bislang durchgeführtes manuelles Aufsuchen und Zuordnen der relevanten Messdaten für das jeweilige Asset erfordert nicht nur einen Zugang zu einer entsprechenden Dokumentation der industriellen Anlage und eine genaue Kenntnis der Ablaufprozesse der industriellen Anlage, sondern auch einen unverhältnismäßig hohen zeitlichen und personellen Aufwand.

Eine Überwachung von Assets erfolgt aktuell beispielsweise mithilfe des Engineering-Systems SIMATIC® PCS 7 der Siemens AG. In der darin implementierten Condition Monitoring Library werden Funktionsbausteine mit einer entsprechenden Überwachungsfunktionalität bereitgestellt. Jeder Funktionsbaustein kann dabei genau ein Asset überwachen. Um einzelne Messdaten einem Funktionsbaustein zuzuordnen, müssen diese in einem CFC-Editor (Continous Function Chart) des SIMATIC® PCS 7 Systems manuell mit dem jeweiligen Funktionsbaustein verknüpft werden.

Im Falle einer Pumpe oder eines Ventils als Asset erfolgt die manuelle Zuordnung der Messstellen zu dem jeweiligen Asset bislang auf Basis eines R&I-Schemas (Rohrleitungs- und Instrumentenfließschemas). Ausgehend von einem betrachteten Asset wird anhand des R&I-Schemas ermittelt, ob Messstellen für Druck und Durchfluss in derselben Rohrleitung wie das Asset vorhanden sind. Der Suchbereich in der Rohrleitung ist dabei durch Verzweigungen oder Strömungswiderstände begrenzt, da davon ausgegangen werden kann, dass nur in einem Rohrleitungsstück, das keine Verzweigungen oder signifikante Strömungswiderstände aufweist, unbeeinflusste Druck- bzw. Durchflussbedingungen vorliegen.

Führt die betrachtete Rohrleitung aus einem Behälter heraus, kann der dem entsprechenden Asset zuzuordnende Druckwert oftmals aus dem Druck im Behälter bzw. dessen Füllstand abgeleitet werden. Wenn die Rohrleitung im umgekehrten Fall in einen Behälter mündet, muss geprüft werden, an welcher Stelle des Behälters dies geschieht. Bei einem offenen Zulauf ist ggf. nur die geodätische Höhe des Zulaufstutzens des Behälters maßgeblich und der Druck an sich konstant.

Idealerweise liegt das R&I-Schema in einer elektronischen, maschinenlesbaren und objektorientierten Form vor, so dass die relevanten Messstellen automatisiert gefunden und entsprechenden Assets zugeordnet werden können. Es ist jedoch nicht davon auszugehen, dass in absehbarer Zeit für jede auf einer Cloud basierende Anwendung ein solches R&I-Schema vorliegt.

Es sind bereits Verfahren bekannt, beispielsweise basierend auf der Plattform "Control Performance Analytics" der Siemens AG, die im Rahmen einer cloudbasierten Regelkreisanalyse alle Funktionsbausteine eines Typs "PID-Regler" in einem Prozessleitsystem einer industriellen Anlage identifizieren und jeweils sämtliche dazugehörige Regel-, Stell- und Sollgrößen der Regler insbesondere in die Cloud exportieren. Dadurch lassen sich alle zur Beurteilung des Reglerverhaltens relevanten Messdaten automatisch bestimmen und auswählen. Dieses Vorgehen kann analog auf Ventil- oder Pumpenbausteine übertragen werden, die dann direkt die Ventilstellung bzw. die Pumpendrehzahl liefern.

Zur Beurteilung beispielsweise eines Ventil-Assets sind die Daten (hier die Ventilstellung), die von der zuvor beschriebenen Analyse der Ventilbausteine gewonnen werden, nicht ausreichend. Es werden noch zusätzliche Messdaten von Messstellen benötigt, die nicht mit dem jeweiligen Baustein gekoppelt sind und sich daher durch die bekannten Verfahren nicht automatisiert ermitteln lassen. Für das Beispiel des Ventils werden noch Messdaten zur Durchflussrate durch das Ventil und Druckwerte vor und hinter dem Ventil benötigt. Analoge Überlegungen gelten beispielsweise für eine Pumpe, wo lediglich eine Drehzahl der Pumpe dem dazugehörigen Baustein zugeordnet ist. Die Messdaten der Durchflussrate sowie der beiden Druckwerte müssen ebenfalls noch separat (manuell) ermittelt werden.

Das Zusammenstellen und Zuordnen der Messdaten, die keinem Baustein zugeordnet sind, erfolgt bislang manuell, was sehr aufwändig ist und eine Funktionalität einer cloudbasierten Überwachung von mechanischen Assets einer industriellen Anlage deutlich beeinträchtigt.

Der Erfindung liegt die Aufgabe zugrunde, ein Verfahren zur Zuordnung von Messdaten für eine cloudbasierte Überwachung mechanischer Assets anzugeben, das vollautomatisiert abläuft und den Aufwand, der für die Zuordnung und, damit einhergehend, die Überwachung aufgewandt werden muss, gegenüber den bislang bekannten Verfahren deutlich reduziert.

Diese Aufgabe wird gelöst durch ein Verfahren zur Zuordnung von Messdaten zur cloudbasierten Überwachung insbesondere mechanischer Assets einer industriellen Anlage nach den Ansprüchen 1, 4 und 5 sowie durch ein dazugehöriges Computerprogramm mit durch einen Computer ausführbaren Programmcodeanweisungen nach Anspruch 12, ein Speichermedium gemäß Anspruch 13 und ein Computersystem nach Anspruch 14. Vorteilhafte Weiterbildungen ergeben sich aus den abhängigen Ansprüchen.

Bei einem Zuordnungsverfahren der eingangs beschriebenen Art wird die Aufgabe erfindungsgemäß durch die folgenden Verfahrensschritte gelöst:

a) Übertragung einer Teilmenge oder einer Gesamtmenge der Messdaten aus dem Messdatenarchiv in die Cloud, um eine Weiterverarbeitung der Messdaten in der Cloud zu ermöglichen

b) Festlegung eines Assets, das einen bestimmten Typ aufweist, insbesondere eines Ventils oder einer Pumpe, wobei dem Asset in der Cloud eine charakteristische Messgröße mit dazugehöriger Messstelle zugeordnet ist;

c) Auslesen eines für den bestimmten Assettyp in der Cloud hinterlegten allgemeinen physikalischen Zusammenhangs zwischen für den bestimmten Assettyp relevanten Messgrößen verschiedener Messstellen;

d) Schrittweise Schätzung der Parameter des physikalischen Zusammenhangs unter Einbeziehung der zu dem bestimmten Assettyp gehörigen charakteristischen Messgröße und den in dem Messdatenarchiv hinterlegten Messdaten der für das bestimmte Asset in Frage kommenden Messgrößen;

e) Schrittweise Vergleich des zuvor ermittelten physikalischen Zusammenhangs mit den zum Schätzen genutzten Messdaten und Bestimmung eines Residuums;

f) Zuordnung der Messdaten zu einem bestimmten Asset anhand einer statistischen Auswertung des ermittelten Residuums.

Unter dem Begriff der Cloud, oder anders ausgedrückt: einem Cloud-Computing-System, wird vorliegend eine Server-Infrastruktur eines externen Cloud-Anbieters (externe Cloud) oder eine lokale Server-Hardware innerhalb der industriellen Anlage (lokale Cloud) verstanden.

Das zuvor erläuterte erfindungsgemäße Verfahren setzt voraus, dass auf alle in Frage kommenden Messdaten an einer Stelle zum Zwecke der Zuordnung zugegriffen werden kann. Dabei spielt es keine Rolle, ob die Daten zunächst im Messdatenarchiv der industriellen Anlage gespeichert und dann (ggf. blockweise) in die Cloud übertragen werden, oder ob die Daten unmittelbar zyklisch in die Cloud übertragen und erst dort gespeichert werden.

Zunächst werden entweder alle Messdaten oder wenigstens eine Teilmenge der Messdaten aus dem Messdatenarchiv in die Cloud übertragen, um einen schnellen und ortsunabhängigen Zugriff auf die Daten zu ermöglichen, und um ggf. die höheren Rechenkapazitäten eines Cloudcomputings nutzen zu können.

In dem nachfolgenden Verfahrensschritt wird ein Asset eines bestimmten Typs festgelegt, beispielsweise ein Ventil oder eine Pumpe. Jedem Asset ist in einer industriellen Anlage üblicherweise wenigstens eine charakteristische Messgröße zugeordnet. Bei einem Ventilasset handelt es sich hierbei in der Regel um die Ventilstellung. Bei einer Pumpe kann es sich beispielsweise um die elektrische Antriebsleistung oder die Drehzahl handeln.

Für jedes in einer industriellen Anlage enthaltene Asset ist ein allgemeiner physikalischer Zusammenhang zwischen relevanten Messgrößen verschiedener Messstellen bekannt und in der Cloud hinterlegt. Für ein Ventilasset besteht beispielsweise ein physikalischer Zusammenhang zwischen einer Durchflussrate durch das Ventil, der zuvor bereits erwähnten Ventilstellung und einer Druckdifferenz vor und hinter dem Ventil. Dieser allgemeine physikalische Zusammenhang, anders ausgedrückt eine physikalische Gleichung, wird aus der Cloud ausgelesen und für das weitere Zuordnungsverfahren als Referenz verwendet.

Der physikalische Zusammenhang wird im Folgenden nur noch als Gleichung bezeichnet. Die Gleichung weist in ihrer allgemeinen Form unbekannte Parameter auf, die in dem nächsten Schritt des erfindungsgemäßen Verfahrens geschätzt werden. Dabei wird die zu dem bestimmten Assettyp gehörige charakteristische Messgröße mit in die Schätzung einbezogen, im Fall des Ventilassets demnach die Ventilstellung.

Die unbekannten Parameter werden anschließend unter Verwendung bekannter Schätzverfahren wie der Minimierung der Fehlerquadrate schrittweise aus den in dem Messdatenarchiv hinterlegten Messdaten, die jeweils für das bestimmte Asset in Frage kommen, d.h. dem Asset zugeordnet sein können, geschätzt.

Im Fall, dass die Minimierung der Fehlerquadrate verwendet wird, wird die Gleichung in die implizite Form $0=F(x,p)$ gebracht, wobei $x$ alle Variablen, $p$ die zu schätzenden Parameter und $F$ eine Funktion bezeichnet. Durch ein schrittweises Einsetzen von Messdaten $X(t)$ kann für die Messdaten einer Messgröße jeweils das Residuum

$$R=sum\_t(F(X(t),p))^2 \qquad\qquad (1)$$

berechnet werden, wobei sum_t für eine zeitliche Summierungsfunktion steht. Für kleine Werte des Residuums verhalten sich die Messdaten entsprechend des der Gleichung zugrunde liegenden physikalischen Zusammenhangs, für große Residuen ist davon auszugehen, dass sich die Messdaten nicht entsprechend des physikalischen Zusammenhangs verhalten, sie also nicht zum gesuchten Asset gehören.

Für weitere Informationen zu dem Schätzverfahren sei auf die Veröffentlichung mit dem Titel "Zustandsüberwachung mechanischer Komponenten mit Hilfe physikalischer Modelle und niedrigdimensionaler Kennfelder", veröffentlicht am 13. Juli 2017 von der Prior Art Publishing GmbH, Registernummer 1136893830 im Katalog der Deutschen Nationalbibliothek, auf deren Inhalt hiermit vollumfänglich Bezug genommen wird.

Das Schätzverfahren zur Bestimmung der unbekannten Parameter der Gleichung wird mit allen in Frage kommenden, in dem Messdatenarchiv hinterlegten Messdaten schrittweise durchgeführt. Dabei wird jeweils das Residuum der Messdaten einer Messgröße ermittelt und, wie zuvor erläutert, statistisch bewertet. Die Schätzung kann dabei für die jeweiligen Messdaten einer Messstelle nacheinander oder, bei einer entsprechend vorhandenen Berechnungsarchitektur, auch parallel durchgeführt werden.

Dem erfindungsgemäßen Zuordnungsverfahren liegt dabei die Erkenntnis zugrunde, dass Messdaten einer bestimmten Messstelle dann zu einer geringen Abweichung, also einem kleinen Residuum führen, wenn sie einen Bezug zu der jeweiligen Messstelle bzw. dem insbesondere mechanischen Asset aufweisen, es sich also um die gesuchte Messgröße handelt. Andernfalls kann die physikalische Gleichung das in den Messdaten gezeigte Verhalten nicht plausibel beschreiben, sodass große Abweichungen zwischen den Messdaten und der parametrierten physikalischen Gleichung bestehen bzw. ein großes Residuum auftritt.

Es ist daher im Rahmen der vorliegenden Erfindung möglich, bestimmte Messdaten einer Messstelle dem Asset zuzuordnen, bezüglich der die aus den jeweiligen Messdaten gewonnene Gleichung das geringste Residuum aufweist. Für die Bestimmung des Residuums kommt beispielsweise die Methode der kleinsten Fehlerquadratsumme in Frage, wie in der Gleichung (1) angegeben. Aber auch andere bekannte statistische Auswertemethoden sind im Rahmen der Erfindung anwendbar, um die ermittelten Abweichungen statistische zu bewerten und eine Zuordnung der Messstellen bzw. der dazugehörigen Messdaten vornehmen zu können.

Es liegt im Rahmen der Erfindung, das erfindungsgemäße Verfahren für eine Vielzahl an Assets schrittweise automatisiert durchzuführen, um eine umfassende Zuordnung der Messdaten innerhalb der industriellen Anlage vornehmen zu können. Das erfindungsgemäße Verfahren erlaubt es dabei erstmals, relevante Messdaten bzw. Messstellen innerhalb einer industriellen Anlage bestimmten Assets, insbesondere mechanischen, elektromechanischen oder elektrischen, automatisiert zuzuordnen, um eine effektive und ressourcensparende Überwachung der Assets durchführen zu können.

Bei einer besonders vorteilhaften Weiterbildung des erfindungsgemäßen Verfahrens wird die zur Durchführung der Schätzungen zu betrachtende Menge der in die Cloud übertragenen Messdaten dadurch reduziert, dass nur Messdaten betrachtet werden, die eine bestimmte physikalische Einheit aufweisen. Wird beispielsweise zunächst ein Drucksensor eines Ventils gesucht, so werden nur Messdaten für die weitere Auswertung berücksichtigt, denen eine Druckeinheit, beispielsweise bar, zugeordnet ist. Dadurch kann die Menge an zu untersuchenden Daten deutlich verringert werden, wodurch sich das Verfahren insgesamt beschleunigen lässt.

Vorteilhafterweise werden im Rahmen einer danach erfolgenden Plausibilitätsprüfung der zuvor gefilterten Messdaten die Messdaten dahingehend überprüft, ob sie für eine spezielle Art einer Messstelle überhaupt in Frage kommen. Dabei wird insbesondere eine zeitliche Abhängigkeit der Messdaten betrachtet. Aber auch statistische Werte wie Mittelwerte, Mediane, Varianzen, Offsets und dergleichen können im Rahmen der Plausibilitätsprüfung verwendet werden.

Wird beispielsweise nach Daten von Drucksensoren in der Umgebung eines Ventils gesucht, kann ein zeitliches Verhalten der Messdaten aufschlussreich sein. Sind die Messdaten einer bestimmten Messstelle in einem Zeitraum konstant, in dem sich eine Stellung des Ventils und eine Durchfluss durch das Ventil ändern, so kann es sich bei den untersuchten Messdaten nicht um einen Ventilausgangsdruck handeln.

Die als unplausibel erachteten Messdaten bestimmter Messstellen werden dann für die weitere Auswertung nicht mehr berücksichtigt.

Es liegt im Rahmen der Erfindung, im Rahmen der zuvor erläuterten vorteilhaften Weiterbildungen des erfindungsgemäßen Verfahrens folgendermaßen vorzugehen: Die Messdaten werden in dem Messdatenarchiv der industriellen Anlage gespeichert und entweder komplett oder zyklisch an eine interne Cloud übertragen. Nachdem die zuvor erläuterten Vorauswahlverfahren vor Ort, das heißt in der als lokale Server-Hardware ausgebildeten (internen) Cloud innerhalb der industriellen Anlage durchgeführt worden sind, werden anschließend nur die für die Asset-Überwachung als relevant erachteten Messdaten an die (externe) Cloud übertragen.

Bei einem Zuordnungsverfahren der eingangs beschriebenen Art wird die Aufgabe erfindungsgemäß auch durch die folgenden Verfahrensschritte gelöst:

a) Übertragung einer Teilmenge oder einer Gesamtmenge der Messdaten aus dem Messdatenarchiv in die Cloud, um eine Weiterverarbeitung der Messdaten in der Cloud zu ermöglichen;
b) Identifizierung von Reglerbausteinen, die Teil der industriellen Anlage sind;
c) Vergleich aller Stellgrößen der Reglerbausteine mit in dem Messdatenarchiv und/oder der Cloud hinterlegten Sollgrößen für insbesondere mechanische Assets;
d) Erfassung einer Regelgröße des jeweiligen Reglerbausteins und Bestimmung einer physikalischen Einheit und einer Bezeichnung der dazugehörigen Messstelle der Regelgröße;
e) Identifizierung eines Typs des jeweiligen Reglerbausteins anhand der Regelgröße sowie deren physikalischen Einheit und Messstellenbezeichnung.

Zunächst werden in der industriellen Anlage alle Reglerbausteine gesucht und identifiziert, die Teil der industriellen Anlage sind. Bei einem Reglerbaustein kann es sich beispielsweise um einen PID-Regler handeln.

Wird bei dem anschließenden Vergleich beispielsweise an einem Reglerbaustein ein Stellgrößenverlauf gefunden, der exakt zu einem in dem Messdatenarchiv oder der Cloud hinterlegten Stellungsverlauf eines betrachteten Ventils passt, so handelt es sich bei dem Reglerbaustein um den das Ventil ansteuernden Prozessregler.

Die darauf erfolgende Ermittlung der physikalischen Einheit der jeweiligen Messdaten und der Bezeichnung der dazugehörigen Messstelle bringt Aufschluss darüber, um welchen Reglertyp es sich bei dem zuvor gefundenen Reglerbaustein handelt. Ist die physikalische Einheit beispielsweise "Masse oder Volumen pro Zeit" und die Bezeichnung "Flow", so handelt es sich um einen Durchflussregler, der den Durchfluss durch das Ventil beeinflusst.

Handelt es sich um einen Druckwert, so kann es ein Druckregler für den Druck vor oder nach dem Ventil sein. Hier kann folgende Überlegung angestellt werden: Bei einer Druckregelung in einer Rohrleitung wird meist der Druck nach dem Ventil geregelt. Dieser reagiert sehr schnell auf Ventilbewegungen, was sich im zeitlichen Verlauf der dazugehörigen Messdaten widerspiegelt. Bei einer Druckregelung in einem Behälter mittels eines Auslassventils wird dagegen der Druck regelmäßig vor dem Ventil geregelt. Hier reagiert der Druck aufgrund der Pufferkapazität des Behälters typischerweise langsamer auf die Ventilbewegungen. Anhand dieser Randbedingungen können die Messdaten einfach und automatisiert einem bestimmten Regler eines bestimmten Assets zugeordnet werden.

Die anhand des zuvor erläuterten Verfahrens ermittelte Regelgröße, die einen für das Asset relevanten Messwert darstellt, bringt den Vorteil mit sich, dass für nachfolgende Datenverarbeitungsverfahren eine unbekannte Variable weniger gefunden werden muss.

Bei einem Zuordnungsverfahren der eingangs beschriebenen Art wird die Aufgabe erfindungsgemäß auch durch die folgenden Verfahrensschritte gelöst:

a) Übertragung einer Teilmenge oder einer Gesamtmenge der Messdaten aus dem Messdatenarchiv in die Cloud, um eine Weiterverarbeitung der Messdaten in der Cloud zu ermöglichen;
b) Festlegung eines Assets, das einen bestimmten Typ aufweist, insbesondere eines Ventils oder einer Pumpe, wobei dem Asset in der Cloud eine charakteristische Messgröße mit dazugehöriger Messstelle zugeordnet ist;
c) Identifizierung von Reglerbausteinen, die Teil der industriellen Anlage sind;
d) Vergleich aller Stellgrößen der Reglerbausteine mit in dem Messdatenarchiv und/oder der Cloud für insbesondere mechanische Assets hinterlegten Sollgrößen;
e) Erfassung einer Regelgröße des jeweiligen Reglerbausteins und Bestimmung einer physikalischen Einheit und einer Bezeichnung der dazugehörigen Messstelle der Regelgröße;
f) Identifizierung eines Typs des jeweiligen Reglerbausteins anhand der Regelgröße sowie deren physikalischen Einheit und Messstellenbezeichnung;
g) Auslesen eines für den bestimmten Assettyp in der Cloud hinterlegten allgemeinen physikalischen Zusammenhangs zwischen für den bestimmten Assettyp relevanten Messgrößen verschiedener Messstellen;
h) Schätzung von Parametern bezüglich des physikalischen Zusammenhangs unter Einbeziehung der zu dem bestimmten Assettyp gehörigen charakteristischen Messgröße, der zu dem Reglerbaustein gehörigen Regelgröße und in der Cloud hinterlegter historischer Messdaten;
i) Schrittweiser Vergleich der in dem Messdatenarchiv hinterlegten Messdaten mit dem zuvor ermittelten physikalischen Zusammenhang und Bestimmung einer Abweichung;

j) Zuordnung der Messdaten zu einem bestimmten Asset anhand einer statistischen Auswertung der ermittelten Abweichungen.

Durch die zuvor erfolgte Identifizierung der zu dem bestimmten Asset gehörigen Reglerbausteine sowie der dazugehörigen Regelgröße muss eine Variable weniger durch Residuenberechnungen ermittelt werden. Bei einem Ventilasset sind die Variablen "Ventilstellung", "Durchflussrate" und "Druckdifferenz" Bestandteil der Gleichung. Die Variable "Druckdifferenz" lässt sich dabei aus den beiden Variablen "Druck vor dem Ventil" und "Druck nach dem Ventil" berechnen.

Im ersten erfindungsgemäßen Verfahrensschritt erhält man durch die Wahl des bestimmten Assets (hier: Ventilassets) die erste Variable "Ventilstellung". Durch die Identifizierung der Reglerbausteine wird die zweite Variable "Durchflussrate" ermittelt. Somit weist die zu schätzende Gleichung nur noch zwei nicht zugeordnete Variable auf, was die Durchführung der Schätzung deutlich erleichtern und die Qualität der Schätzergebnisse und der Zuordnung verbessern kann.

Bei einer besonders vorteilhaften Weiterbildung des zuvor erläuterten erfindungsgemäßen Verfahrens wird die zur Durchführung der Schätzungen zu betrachtende Menge der in die Cloud übertragenen Messdaten dadurch reduziert, dass nur Messdaten betrachtet werden, die eine bestimmte physikalische Einheit aufweisen. Wird beispielsweise zunächst ein Drucksensor eines Ventils gesucht, so werden nur Messdaten für die weitere Auswertung berücksichtigt, denen eine Druckeinheit, beispielsweise bar, zugeordnet ist. Dadurch kann die Menge an zu untersuchenden Daten deutlich verringert werden, wodurch sich das Verfahren insgesamt beschleunigen lässt.

Vorteilhafterweise werden im Rahmen einer danach erfolgenden Plausibilitätsprüfung der zuvor gefilterten Messdaten die Messdaten dahingehend überprüft, ob sie für eine spezielle Art einer Messstelle überhaupt in Frage kommen. Dabei wird insbesondere eine zeitliche Abhängigkeit der Messdaten betrachtet. Aber auch statistische Werte wie Mittelwerte, Mediane, Varianzen, Offsets und dergleichen können im Rahmen der Plausibilitätsprüfung verwendet werden.

Wird beispielsweise nach Daten von Drucksensoren in der Umgebung eines Ventils gesucht, kann ein zeitliches Verhalten der Messdaten aufschlussreich sein. Sind die Messdaten einer bestimmten Messstelle in einem Zeitraum konstant, in dem sich eine Stellung des Ventils und eine Durchfluss durch das Ventil ändern, so kann es sich bei den untersuchten Messdaten nicht um einen Ventilausgangsdruck handeln.

Die als unplausibel erachteten Messdaten bestimmter Messstellen werden dann für die weitere Auswertung nicht mehr berücksichtigt.

Bei einer vorteilhaften Weiterbildung der erfindungsgemäßen Verfahren wird zur Identifizierung der Messdaten mit der bestimmten physikalischen Einheit nur ein Teilbereich der industriellen Anlage, vorzugsweise nur ein bestimmte verfahrenstechnische Einheit (z.B. Destillationskolonne, Rührkesselreaktor, Fermenter), berücksichtigt. Die Beschränkung grenzt die für ein jeweiliges Asset in Frage kommenden Messdaten bzw. Messstellen deutlich ein, was die Zuordnungsgenauigkeit erhöhen und den für das Zuordnungsverfahren benötigten Aufwand verringern kann.

Vorteilhafterweise werden die Messdaten vor Beginn des Zuordnungsverfahrens in Trainingsdaten und Validierungsdaten unterteilt, wodurch sich das Zuordnungsverfahren weiter verbessern lässt. Werden nicht zu einem bestimmten Asset gehörige Messdaten einer Messstelle zur Parametrierung der physikalischen Gleichung genutzt, fällt die Abweichung der Validierungsdaten noch höher aus als ohne Unterteilung der Messdaten. Dadurch lassen sich die Messdaten noch besser einem bestimmten Asset zuordnen.

Im Rahmen einer besonders vorteilhaften Weiterbildung des Zuordnungsverfahrens werden nach Abschluss des Zuordnungsverfahrens einem Nutzer der industriellen Anlage automatisiert Vorschläge bezüglich einer Zuordnung einzelner Messdaten zu bestimmten Assets unterbreitet. Der Nutzer muss dabei keine langen Signallisten durchgehen, sondern bekommt eine einzige Zuordnung als Ergebnis des automatisierten Zuordnungsprozesses präsentiert. Dadurch kann mit vertretbarem Mehraufwand sichergestellt werden, dass kein Asset-Überwachungssystem in Betrieb genommen wird, das falsche Zuordnungen von Messstellen zu Assets aufweist.

Gerade wenn die Zuordnung in Grenzfällen nicht mit ausreichend hoher Sicherheit erfolgen kann, ist es zudem vorteilhaft, wenn dem Nutzer nach Abschluss des Zuordnungsverfahrens automatisiert eine Mehrzahl an Vorschlägen unterbreitet wird, worauf der Nutzer eine manuelle Entscheidung über eine endgültige Zuordnung der Messdaten zu bestimmten Assets treffen kann. Dadurch lassen sich etwaige Fehlzuordnungen effektiv vermeiden.

Das beschriebene Verfahren mit seinen Ausgestaltungen ist bevorzugt in einer Software implementiert. Die zuvor ausgeführte Aufgabe wird entsprechend auch durch ein Computerprogramm mit durch einen Computer ausführbaren Programmcodeanweisungen zur Implementierung des erfindungsgemäßen Verfahrens gelöst. Bei dem Computer kann es sich beispielsweise um ein Automatisierungsgerät mit einer Verarbeitungseinheit nach Art eines Prozessors oder dergleichen handeln.

Ein Automatisierungsgerät, insbesondere ein Industrieautomatisierungsgerät, auf dem ein derartiges Computerprogramm implementiert ist, ist ein Beispiel für ein Computersystem, auf welches sich die Erfindung ebenfalls bezieht. Anstelle des Automatisierungsgerätes kommen auch Standardcomputer, wie sie bei der Büroautomatisierung üblich sind, in Betracht.

Das Computerprogramm zur Implementierung des Verfahrens wird üblicherweise auf oder in einem Speichermedium, also beispielsweise auf einem magnetischen oder optischen Datenträger oder in einem Halbleiterspeicher, vorgehalten, so dass die Erfindung auch ein Speichermedium mit einem durch einen Computer ausführbaren Computerprogramm zur Implementierung des erfindungsgemäßen Verfahrens und seiner Ausgestaltungen betrifft.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den beiden Zeichnungen näher erläutert wird. Es zeigen:

FIG 1     ein Kennlinienfeld eines Ventil-Assets mit zu dem Ventil-Asset gehörigen Messdaten; und

FIG 2     das Kennlinienfeld des Ventil-Assets mit nicht zu dem Ventil-Asset gehörigen Messdaten.

Ein erfindungsgemäßes Verfahren wird am Beispiel eines Ventil-Assets erläutert. Es steht außer Frage, dass sich das Verfahren auch auf andere mechanische, elektromechanische oder elektrische Assets anwenden lässt.

Zunächst werden entweder alle Messdaten oder wenigstens eine Teilmenge der Messdaten aus dem Messdatenarchiv in die Cloud übertragen, um einen schnellen und ortsunabhängigen Zugriff auf die Daten zu ermöglichen. Es kann sich dabei um eine interne oder eine externe Cloud (außerhalb der industriellen Anlage) handeln.

Im nachfolgenden Verfahrensschritt werden in der industriellen Anlage alle Assets vom Typ "Ventil" sowie alle Reglerbausteine gesucht und identifiziert. Bei den Reglerbausteinen handelt es sich dabei um PID-Regler. Es kann dabei davon ausgegangen werden, dass zu den meisten in der industriellen Anlage enthaltenen Ventil-Assets auch entsprechende Reglerbausteine existieren.

In einem anschließenden Vergleich werden die Daten aller Stellgrößen der Reglerbausteine mit den Sollventilstellungen der Ventilbausteine verglichen. Die Sollventilstellungen sind dabei in der industriellen Anlage beispielsweise in dem Messdatenarchiv, oder in der Cloud selbst hinterlegt. Wird bei dem Vergleich an einem Reglerbaustein ein Stellgrößenverlauf gefunden, der exakt zu einem in dem Messdatenarchiv oder der Cloud hinterlegten Sollwertverlauf eines betrachteten Ventils passt, so handelt es sich bei dem Reglerbaustein um den das Ventil ansteuernden Prozessregler.

Eine darauf erfolgende Ermittlung der physikalischen Einheit der jeweiligen Messdaten und der Bezeichnung der dazugehörigen Messstelle bringt Aufschluss darüber, um welchen Reglertyp es sich bei dem zuvor gefundenen Reglerbaustein handelt. Ist die physikalische Einheit beispielsweise "Masse oder Volumen pro Zeit" und die Bezeichnung "Flow", so handelt es sich um einen Durchflussregler für den Durchfluss durch das Ventil.

Handelt es sich um einen Druckwert, so kann es ein Druckregler vor oder nach dem Ventil sein. Hier kann folgende Überlegung angestellt werden: Bei einer Druckregelung in einer Rohrleitung wird meist der Druck nach dem Ventil geregelt. Dieser reagiert sehr schnell auf Ventilbewegungen, was sich im zeitlichen Verlauf der dazugehörigen Messdaten widerspiegelt. Bei einer Druckregelung in einem Behälter mittels eines Auslassventils wird dagegen der Druck regelmäßig vor dem Ventil geregelt. Hier reagiert der Druck aufgrund der Pufferkapazität des Behälters typischerweise langsamer auf die Ventilbewegungen. Anhand dieser Randbedingungen können die Messdaten einfach und automatisiert einem bestimmten Regler eines bestimmten Assets zugeordnet werden.

Im vorliegenden Ausführungsbeispiel ist für das Ventil ein Durchflussregler gefunden worden, so dass noch zwei Druckwerte (vor und hinter dem Ventil) gefunden werden müssen, um das Ventilverhalten vollständig abbilden zu können.

In einem nächsten Verfahrensschritt wird die Menge der in die Cloud übertragenen Messdaten dadurch reduziert, dass nur Messdaten betrachtet werden, die eine bestimmte physikalische Einheit aufweisen. In diesem Fall werden Drucksensoren des Ventils gesucht. Daher werden nur Messdaten für die weitere Auswertung berücksichtigt, denen eine Druckeinheit, beispielsweise bar, zugeordnet ist. Dadurch kann die Menge an zu untersuchenden Daten deutlich verringert werden, wodurch sich das Verfahren insgesamt beschleunigen lässt.

Im Anschluss erfolgt eine Plausibilitätsprüfung der zuvor gefilterten Messdaten. Diese werden dahingehend überprüft, ob sie für einen Drucksensor überhaupt in Frage kommen. Dabei wird insbesondere eine zeitliche Abhängigkeit der Messdaten betrachtet. Aber auch statistische Werte wie Mittelwerte, Mediane, Varianzen, Offsets und dergleichen können im Rahmen der Plausibilitätsprüfung verwendet werden.

Sind die Messdaten einer bestimmten Messstelle in einem Zeitraum konstant, in dem sich eine Stellung des Ventils und der Durchfluss durch das Ventil ändern, so kann es sich bei den untersuchten Messdaten nicht um einen Ventilausgangsdruck handeln.

Die als unplausibel erachteten Messdaten bestimmter Messstellen werden dann für die weitere Auswertung nicht mehr berücksichtigt.

Die Messdaten der Ventilstellung und des Durchflusses sind dem Ventil-Asset zugeordnet, die Messdaten des Drucks vor und hinter dem Ventil sind jedoch noch nicht zugeordnet. Alle Messdatenstehen in einem physikalischen Zusammenhang und können mittels einer in der Cloud hinterlegten Gleichung in einen Zusammenhang gebracht werden.

Unbekannte Parameter dieser Gleichung können mithilfe der in die Cloud übertragenen Messdaten durch bekannte Verfahren, wie die Minimierung der Fehlerquadratsumme, geschätzt werden. Dabei werden alle noch in Frage kommenden Messdaten von Drucksignalen durchpermutiert und für alle Kombinationen ein Parametersatz gelernt.

Dabei führt die Schätzung mit Messdaten, die von dem Ventil-Asset zugeordneten Messstellen stammen, zu einer vergleichsweise geringen Abweichung der geschätzten Gleichung von den Messdaten, mit anderen Wort zu einem kleinen Residuum. Umgekehrt führt die Schätzung mit Messdaten, die nicht dem bestimmten Asset zugeordnet sind, zu einer großen Abweichung bzw. zu einem großen Residuum. Die Schätzung kann dabei für die jeweiligen Messdaten einer Messstelle nacheinander oder, bei einer entsprechend vorhandenen Berechnungsarchitektur, auch parallel durchgeführt werden.

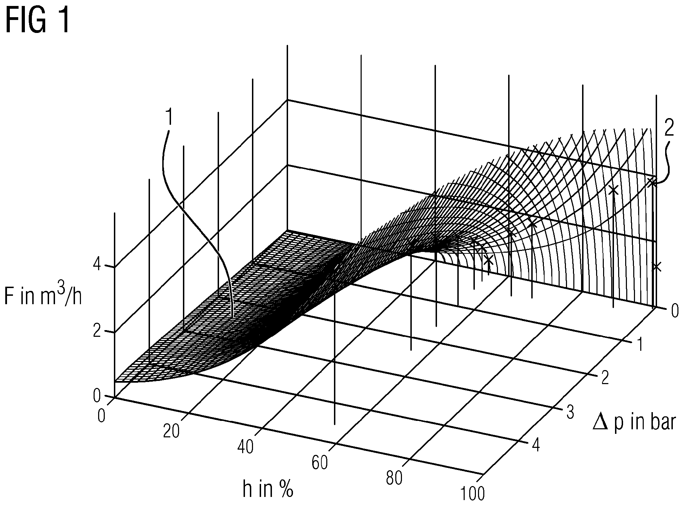

Figur 1 zeigt ein Kennlinienfeld 1 des Ventils. Dargestellt ist die Abhängigkeit zwischen dem Durchfluss (in Kubikmeter pro Stunde), der Ventilöffnung (in Prozent) und der Druckdifferenz vor und hinter dem Ventil (in bar). Zusätzlich sind einzelne Datenpunkte 2 der zuzuordnenden Messdaten eines Drucksensors dargestellt. Es ist gut zu erkennen, dass die Abweichung der Datenpunkte von dem (Soll-)Kennlinienfeld sehr gering ist, d.h. die Datenpunkte mit anderen Worten sehr gut in das Kennlinienfeld passen.

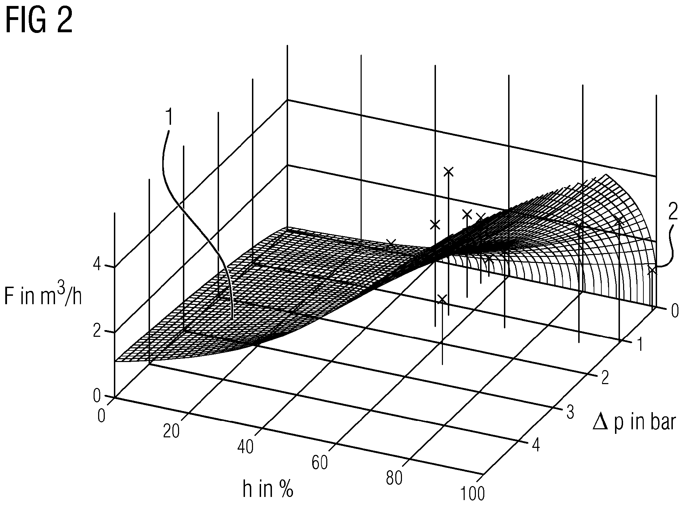

In Figur 2 ist der umgekehrte Fall dargestellt. Die Datenpunkte 2 passen sehr schlecht zu dem Kennlinienfeld 1, d.h. die Abweichung ist sehr groß. Es kann daher davon ausgegangen werden, dass die zu den untersuchten Messdaten gehörige Messstelle nicht dem Ventil-Asset zugehörig ist.

Am Ende des Verfahrens ist für das Ventil dessen Ventilstellung, der Durchfluss und der Druck vor und nach dem Ventil bekannt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur Zuordnung von Messdaten zur cloudbasierten Überwachung insbesondere mechanischer Assets einer industriellen Anlage, wobei die industrielle Anlage ein Messdatenarchiv aufweist, in welchem Messdaten einer Mehrzahl an Messstellen, insbesondere Druck- oder Durchflusssensoren, hinterlegt sind, das Zuordnungsverfahren umfassend:

   a) Übertragung einer Teilmenge oder einer Gesamtmenge der Messdaten aus dem Messdatenarchiv in die Cloud, um eine Weiterverarbeitung der Messdaten in der Cloud zu ermöglichen;
   b) Festlegung eines Assets, das einen bestimmten Typ aufweist, insbesondere eines Ventils oder einer Pumpe, wobei dem Asset in der Cloud eine charakteristische Messgröße mit dazugehöriger Messstelle zugeordnet ist;
   c) Auslesen eines für den bestimmten Assettyp in der Cloud hinterlegten allgemeinen physikalischen Zusammenhangs zwischen für den bestimmten Assettyp relevanten Messgrößen verschiedener Messstellen, wobei der allgemeine physikalische Zusammenhang eine Anzahl an zu bestimmenden Parametern aufweist;
   d) Schrittweise Schätzung der Parameter des physikalischen Zusammenhangs unter Einbeziehung der zu dem bestimmten Assettyp gehörigen charakteristischen Messgröße und den in dem Messdatenarchiv hinterlegten Messdaten der für das bestimmte Asset in Frage kommenden Messgrößen;
   e) Schrittweise Vergleich des zuvor ermittelten physikalischen Zusammenhangs mit den zum Schätzen genutzten Messdaten und Bestimmung eines Residuums;
   f) Zuordnung der Messdaten zu einem bestimmten Asset anhand einer statistischen Auswertung des ermittelten Residuums.

2. Verfahren nach Anspruch 1, bei dem vor Durchführung der Verfahrensschritte d bis f Messdaten in der Cloud identifiziert werden, denen eine bestimmte physikalische Einheit zugewiesen ist, um für den für den bestimmten Assettyp relevanten physikalischen Zusammenhang irrelevante Messdaten von der weiteren Auswertung auszuschließen.

3. Verfahren nach Anspruch 1 oder 2, bei dem die in die Cloud übertragenen Messdaten vor Durchführung der Verfahrensschritte d bis f gemäß Anspruch 1 einer Plausibilitätsprüfung unterzogen werden, derart, dass charakteristische Merkmale der Messdaten, insbesondere deren zeitlicher Verlauf, in einen Zusammenhang mit dem bestimmten Asset gebracht werden, um unplausible Messdaten für das weitere Zuordnungsverfahren nicht weiter zu berücksichtigen.

4. Verfahren zur Zuordnung von Messdaten zur cloudbasierten Überwachung insbesondere mechanischer Assets einer industriellen Anlage, wobei die industrielle Anlage ein Messdatenarchiv aufweist, in welchem Messdaten einer Mehrzahl an Messstellen, insbesondere Druck- oder Durchflusssensoren, hinterlegt sind, das Zuordnungsverfahren umfassend:

a) Übertragung einer Teilmenge oder einer Gesamtmenge der Messdaten aus dem Messdatenarchiv in die Cloud, um eine Weiterverarbeitung der Messdaten in der Cloud zu ermöglichen;
b) Festlegung eines Assets, das einen bestimmten Typ aufweist, insbesondere eines Ventils oder einer Pumpe, wobei dem Asset in der Cloud eine charakteristische Messgröße mit dazugehöriger Messstelle zugeordnet ist;
c) Identifizierung von Reglerbausteinen, die Teil der industriellen Anlage sind;
d) Vergleich aller Stellgrößen der Reglerbausteine mit in dem Messdatenarchiv und/oder der Cloud für insbesondere mechanische Assets hinterlegten Sollgrößen;
e) Erfassung einer Regelgröße des jeweiligen Reglerbausteins und Bestimmung einer physikalischen Einheit und einer Bezeichnung der dazugehörigen Messstelle der Regelgröße;
f) Identifizierung eines Typs des jeweiligen Reglerbausteins anhand der Regelgröße sowie deren physikalischen Einheit und Messstellenbezeichnung.

5. Verfahren zur Zuordnung von Messdaten zur cloudbasierten Überwachung insbesondere mechanischer Assets einer industriellen Anlage, wobei die industrielle Anlage ein Messdatenarchiv aufweist, in welchem Messdaten einer Mehrzahl an Messstellen, insbesondere Druck- oder Durchflusssensoren, hinterlegt sind, das Zuordnungsverfahren umfassend:

a) Übertragung einer Teilmenge oder einer Gesamtmenge der Messdaten aus dem Messdatenarchiv in die Cloud, um eine Weiterverarbeitung der Messdaten in der Cloud zu ermöglichen;
b) Festlegung eines Assets, das einen bestimmten Typ aufweist, insbesondere eines Ventils oder einer Pumpe, wobei dem Asset in der Cloud eine charakteristische Messgröße mit dazugehöriger Messstelle zugeordnet ist;
c) Identifizierung von Reglerbausteinen, die Teil der industriellen Anlage sind;
d) Vergleich aller Stellgrößen der Reglerbausteine mit in dem Messdatenarchiv und/oder der Cloud für insbesondere mechanische Assets hinterlegten Sollgrößen;
e) Erfassung einer Regelgröße des jeweiligen Reglerbausteins und Bestimmung einer physikalischen Einheit und einer Bezeichnung der dazugehörigen Messstelle der Regelgröße;
f) Identifizierung eines Typs des jeweiligen Reglerbausteins anhand der Regelgröße sowie deren physikalischen Einheit und Messstellenbezeichnung;
g) Auslesen eines für den bestimmten Assettyp in der Cloud hinterlegten allgemeinen physikalischen Zusammenhangs zwischen für den bestimmten Assettyp relevanten Messgrößen verschiedener Messstellen;
h) Schrittweise Schätzung der Parameter des physikalischen Zusammenhangs unter Einbeziehung der zu dem bestimmten Assettyp gehörigen charakteristischen Messgröße und den in dem Messdatenarchiv hinterlegten Messdaten der für das bestimmte Asset in Frage kommenden Messgrößen;
i) Schrittweiser Vergleich des zuvor ermittelten physikalischen Zusammenhangs mit den zum Schätzen genutzten Messdaten und Bestimmung eines Residuums;
j) Zuordnung der Messdaten zu einem bestimmten Asset anhand einer statistischen Auswertung des ermittelten Residuums.

6. Verfahren nach Anspruch 5, bei dem vor Durchführung der Verfahrensschritte h bis j gemäß Anspruch 5 Messdaten in der Cloud identifiziert werden, denen eine bestimmte physikalische Einheit zugewiesen ist, um für den für den bestimmten Assettyp relevanten physikalischen Zusammenhang irrelevante Messdaten von der weiteren Auswertung auszuschließen.

7. Verfahren nach Anspruch 5 oder 6, bei dem die in die Cloud übertragenen Messdaten vor Durchführung der Verfahrensschritte h bis j gemäß Anspruch 5 einer Plausibilitätsprüfung unterzogen werden, derart, dass charakteristische Merkmale der Messdaten, insbesondere deren zeitlicher Verlauf, in einen Zusammenhang mit dem bestimmten Asset gebracht werden, um unplausible Messdaten für das weitere Zuordnungsverfahren nicht weiter zu berücksichtigen.

8. Verfahren nach einem der vorangegangenen Ansprüche, bei dem zur Zuordnung der Messdaten nur ein Teilbereich der industriellen Anlage, vorzugsweise nur eine verfahrenstechnische Einheit, berücksichtigt wird.

9. Verfahren nach einem der vorangegangenen Ansprüche, bei dem die Messdaten vor Beginn des Zuordnungsverfahrens in Trainingsdaten und Validierungsdaten unterteilt werden.

10. Verfahren nach einem der vorangegangenen Ansprüche, bei dem nach Abschluss des Zuordnungsverfahrens einem Nutzer der industriellen Anlage automatisiert Vorschläge bezüglich einer Zuordnung einzelner Messdaten zu bestimmten Assets unterbreitet werden.

11. Verfahren nach Anspruch 10, bei dem dem Nutzer nach Abschluss des Zuordnungsverfahrens automatisiert eine Mehrzahl an Vorschlägen unterbreitet wird, worauf der Nutzer eine manuelle Entscheidung über eine endgültige Zuordnung der Messdaten zu bestimmten Assets treffen kann.

12. Computerprogramm mit durch einen Computer ausführbaren Programmcodeanweisungen zur Implementierung des Verfahrens nach einem der Ansprüche 1 bis 11.

13. Speichermedium mit einem durch einen Computer ausführbaren Computerprogramm gemäß Anspruch 12.

14. Computersystem, auf dem ein Computerprogramm nach Anspruch 12 implementiert ist.

FIG 1

FIG 2

**Europäisches Patentamt**
**European Patent Office**
**Office européen des brevets**

# EUROPÄISCHER RECHERCHENBERICHT

**Nummer der Anmeldung**

EP 17 19 4030

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 801 935 A1 (ROCKWELL AUTOMATION TECH INC [US]) 12. November 2014 (2014-11-12) * Absatz [0021] - Absatz [0026]; Abbildungen 1,6,8 * * Absatz [0053] - Absatz [0059] * ----- | 1-3,8-14 | INV. G05B23/02 |
| X | DE 10 2013 112896 A1 (MITSUBISHI HITACHI POWER SYSTEMS EURO GM) 28. Mai 2015 (2015-05-28) * Absatz [0001] - Absatz [0009] * * Absatz [0042] - Absatz [0048] * ----- | 1-3,8-14 | |
| X | US 2012/079470 A1 (FUKATSU NORIYASU [JP]) 29. März 2012 (2012-03-29) * Absätze [0009], [0058]; Abbildung 9 * ----- | 4-7 | |
| X | DE 102 34 687 A1 (HONDA MOTOR CO LTD [JP]) 6. März 2003 (2003-03-06) * Absatz [0135]; Abbildung 3 * ----- | 4-7 | |
| X | DE 31 41 560 A1 (LEEDS & NORTHRUP CO [US]) 5. August 1982 (1982-08-05) * Seite 6 - Seite 12; Abbildung 1 * ----- | 4-7 | RECHERCHIERTE SACHGEBIETE (IPC) G05B |

Der vorliegende Recherchenbericht wurde für alle Patentansprüche erstellt

| Recherchenort | Abschlußdatum der Recherche | Prüfer |
|---|---|---|
| München | 1. März 2018 | Rakoczy, Tobias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

    Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 17 19 4030

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-3, 8-14

   Verfahren zur Zuordnung von Messdaten zu einem Gerät einer industriellen Anlage. Die Aufgabe, die durch den Gegenstand der Ansprüche der Gruppe 1 gelöst wird, kann darin gesehen werden, Messdaten aus einem Archiv einem bestimmten Gerät zuzuordnen.

   ---

2. Ansprüche: 4-7

   Verfahren zur Identifizierung von Reglerbausteinen und des Typs des jeweiligen Reglerbausteins einer Anlage. Die Aufgabe, die durch den Gegenstand der Ansprüche der Gruppe 1 gelöst wird, kann, soweit der Anspruch verstanden werden kann, darin gesehen werden, Reglerbausteine und Typen von Reglerbausteinen einer Anlage zu ermitteln.

   ---

**ANHANG ZUM EUROPÄISCHEN RECHERCHENBERICHT
ÜBER DIE EUROPÄISCHE PATENTANMELDUNG NR.**

EP 17 19 4030

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-03-2018

| Im Recherchenbericht angeführtes Patentdokument | Datum der Veröffentlichung | Mitglied(er) der Patentfamilie | Datum der Veröffentlichung |
|---|---|---|---|
| EP 2801935 A1 | 12-11-2014 | CN 104142662 A<br>EP 2801935 A1<br>US 2014337429 A1<br>US 2016330291 A1 | 12-11-2014<br>12-11-2014<br>13-11-2014<br>10-11-2016 |
| DE 102013112896 A1 | 28-05-2015 | CN 105900030 A<br>DE 102013112896 A1<br>EP 3072018 A1<br>JP 2016537729 A<br>KR 20160091942 A<br>WO 2015074772 A1 | 24-08-2016<br>28-05-2015<br>28-09-2016<br>01-12-2016<br>03-08-2016<br>28-05-2015 |
| US 2012079470 A1 | 29-03-2012 | CN 103124938 A<br>DE 112011103308 T5<br>JP 4987169 B2<br>JP WO2012043008 A1<br>KR 20130095763 A<br>US 2012079470 A1<br>WO 2012043008 A1 | 29-05-2013<br>29-08-2013<br>25-07-2012<br>06-02-2014<br>28-08-2013<br>29-03-2012<br>05-04-2012 |
| DE 10234687 A1 | 06-03-2003 | DE 10234687 A1<br>JP 4430270 B2<br>JP 2003050604 A<br>US 2003033075 A1<br>US 2005033456 A1 | 06-03-2003<br>10-03-2010<br>21-02-2003<br>13-02-2003<br>10-02-2005 |
| DE 3141560 A1 | 05-08-1982 | AU 541391 B2<br>DE 3141560 A1<br>GB 2086082 A<br>JP S57121707 A<br>US 4368510 A | 03-01-1985<br>05-08-1982<br>06-05-1982<br>29-07-1982<br>11-01-1983 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Nicht-Patentliteratur**

- Zustandsüberwachung mechanischer Komponenten mit Hilfe physikalischer Modelle und niedrigdimensionaler Kennfelder. Prior Art Publishing GmbH, 13. Juli 2017